# EUROPÄISCHE PATENTSCHRIFT

(11) **EP 1 603 484 B1**
(45) Veröffentlichungstag und Bekanntmachung des Hinweises auf die Patenterteilung: **05.09.2007**
(21) Anmeldenummer: 04709180.6
(22) Anmeldetag: 09.02.2004
(51) Int. Cl.: A61C 19/05

(54) **DENTALMEDIZINISCHE VORRICHTUNG ZUR REGISTRIERUNG DER POSITION DER KIEFER EINES PATIENTEN IN BEZUG AUF EINANDER MITTELS REGISTRIERPLATTEN**
DENTAL DEVICE FOR RECORDING THE POSITION OF THE JAWS OF A PATIENT IN RELATION TO ONE ANOTHER BY MEANS OF RECORDING PLATES
DISPOSITIF DE MEDECINE DENTAIRE POUR ENREGISTRER LA POSITION DES MACHOIRES D'UN PATIENT L'UNE PAR RAPPORT A L'AUTRE, AU MOYEN DE PLAQUES D'ENREGISTREMENT

(30) Priorität: 18.03.2003 CH 434032003
(43) Veröffentlichungstag der Anmeldung: 14.12.2005
(73) Patentinhaber: Dentalgeräte "Condylator", Gerber, Peter T., 8038 Zurich (CH)
(72) Erfinder: SELLMANN, Hans, 45770 Marl (DE)
(74) Vertreter: Schmauder, Klaus Dieter
(86) Internationale Anmeldenummer: PCT/CH2004/000073
(87) Internationale Veröffentlichungsnummer: WO 2004/082516

(56) Entgegenhaltungen:
- DE-A- 10 154 994
- US-A- 2 447 287
- US-A- 2 481 203
- US-A- 3 564 717
- US-A- 5 044 950
- US-A- 5 059 120

## Beschreibung

### Technisches Gebiet

Die vorliegende Erfindung betrifft eine dentalmedizinische Vorrichtung zur Registrierung der Position der Kiefer eines Patienten in Bezug auf einander, wobei die Vorrichtung ein Paar von Registrierplatten umfasst, von denen mindestens die eine einstückig ist sowie eine im Wesentlichen flächige Ausdehnung bei nahezu konstanter Dicke aufweist, eine obere Registrierplatte am Oberkiefer des Patienten und eine untere Registrierplatte am Unterkiefer des Patienten befestigbar ist, bezogen auf die Position eines "in situ" beim Patienten eingesetzten Paares von Registrierplatten jede der Registrierplatten um eine Sagittalebene spiegelsymmetrisch ist, und die eine Registrierplatte mit einer ebenen Schreibfläche und die andere Registrierplatte mit einer zur Zusammenwirkung mit der Schreibfläche bestimmten Schreibspitze versehen ist.

### Stand der Technik

Registriervorrichtungen der eingangs angegebenen Art sind im dentalmedizinischen Bereich bekannt. Ihre Registrierplatten müssen auf den natürlichen oder künstlichen Zähnen des Patienten fixiert werden, damit sie nicht verrutschen und die Zunge sie nicht wegstösst. Nach Befestigung je einer der Registrierplatten am Oberkiefer bzw. am Unterkiefer des Patienten (beispielsweise mit schnell härtendem Dentalsilikon) wird der Patient veranlasst, zusammenzubeissen d.h. die Kiefer samt den daran befestigten Registrierplatten zusammenzudrücken, worauf die Schreibspitze an die gegenüberliegende Schreibfläche angedrückt wird. Danach wird der Patient veranlasst, mit dem Unterkiefer relativ zum Oberkiefer bestimmte Bewegungen auszuführen, worauf die Schreibspitze auf der Schreibfläche eine Schreibspur zeichnet, beispielsweise indem sie eine Kratzspur in einer auf der Schreibfläche aufgetragenen Wachsschicht hinterlässt. Aus dieser Schreibspur, dem so genannten "Pfeilwinkel", kann eine Fachperson, beispielsweise ein Zahnarzt bzw. eine Zahnärztin, eine Information zur Lage der Kiefer des Patienten in Bezug auf einander ableiten, beispielsweise im Hinblick auf die Fertigung eines abnehmbaren oder festsitzenden Zahnersatzes oder zur Kontrolle der Okklusion der bestehenden Zähne des Patienten.

In der Registriervorrichtung kann die Schreibspitze an der oberen Registrierplatte oder an der unteren Registrierplatte angeordnet sein, beide Anordnungen haben ihre Vor- und Nachteile. Ist die Schreibspitze an der oberen Registrierplatte angeordnet, so ist die Schreibspur für die Fachperson leichter und bequemer, jedoch seitenverkehrt sichtbar und folglich besser zu betrachten, dafür aber umständlicher zu interpretieren. Im gegenteiligen Fall ist die Schreibspur zwar weniger leicht und bequem, jedoch seitenrichtig sichtbar und folglich weniger gut zu betrachten, dafür aber leichter zu interpretieren.

Um dentalmedizinisch richtig verwendbar zu sein, soll die Registriervorrichtung, wenn im Mund des Patienten eingesetzt, die zusammengedrückten Kiefer beim Patienten vorne in der Mitte (fachsprachlich: "anterior") um nicht mehr als etwa einen Zentimeter auseinander zwingen und am Erreichen der normalen Zusammenbeiss-Position (fachsprachlich: der "Okklusion") hindern. Ein Hauptgrund dafür ist, dass die Beschaffenheit des Kiefergelenks bei grösseren Öffnungen nicht nur eine reine Rotation (bei der sich der Kieferkompass öffnet), sondern auch eine beim Registrieren unerwünschte Sagittalbewegung (bei der sich der Unterkiefer nach vorne verschiebt) bewirkt. Es steht somit für die Konstruktion der Registriervorrichtung nicht viel Höhe zu Verfügung, und deshalb sind die bisher bekannten Registriervorrichtungen - mit der Ausnahme neuer anzufertigender Totalprothesen - unhandlich und deren Registrierplatten an den Kiefern des Patienten nicht leicht zu befestigen: In anderen Worten, damit zu arbeiten ist arbeitsaufwendig und zeitraubend. Beim Stand der Technik stehen keine Registrierplatten zur Verfügung, die für alle dentalmedizinisch vorliegenden Fälle oder zumindest für die meisten davon verwendbar wären. Insbesondere bei bezahnten Patienten muss die Fachperson längere Zeit an der Herstellung je einer oberen und unteren Kunststoffplatte arbeiten, denn die Registrierplatten müssen in eine den Zähnen genau angepasste Kunststoffbasis eingebaut werden. Der entsprechende Zeitaufwand kommt dem Patienten (und ggf. den Krankenkassen) sehr teuer zu stehen.

Aus US-2481203 ist eine Vorrichtung zur Registrierung der Position zweier Kauflächen in Bezug auf einander bekannt. Dem Anschein nach sind die Registrierplatten so geformt, dass ihre Führung am Gebiss möglich scheint, in Wirklichkeit aber ist in der Vertikalen keine Führung gewährleistet. Die Registrierplatten weisen nämlich eine schalenförmige Basis auf, damit in der vertikalen Richtung kein Platz verloren geht und der Stützstift in der Höhe darin Platz findet. Wohl entsteht dabei auch ein seitlicher Anschlag am Gebiss, sobald entsprechende Massen (beispielsweise aus Silicon) zwischen den Registrierplatten und den Zähnen eingegeben werden. Demgegenüber entsteht aber eine vertikale Abstützung nur an der Schleimhaut, nicht am Gebiss.

Diese sowie andere bekannte Vorrichtungen ermöglichen keine zuverlässige Registrierung bezahnter Patienten ohne Vorarbeiten wie beispielsweise die individuelle Herstellung entsprechender Kunststoffteile. Bei bezahnten Patienten ist die zuverlässige Registrierung ohne Vorarbeiten ein noch ungelöstes Problem.

### Darstellung der Erfindung

Aufgabe der Erfindung ist es demnach, eine Vorrichtung der eingangs genannten Art vorzuschlagen, deren Handhabung, verglichen mit dem Stand der Technik, weniger aufwendig, insbesondere leichter und daher schneller ist. Es sollen keine umfangreichen Vorbereitungsarbeiten im Labor und in der Zahnklinik nötig sein, und die allenfalls in verschiedenen Grössen auf Lager bereitgehaltenen Registrierplatten sollen für alle dentalmedizinisch vorliegenden Fälle oder zumindest für die meisten davon verwendbar sein. Insbesondere aber soll die Handhabung dadurch wesentlich verbessert werden, dass sich sowohl eine seitliche wie auch eine vertikale Führung der Registrierplatte und ggf. auch noch eine vordere Führung der Registrierplatte am Gebiss ohne besonderes Dazutun ergibt.

Gelöst wird diese Aufgabe bei einer Vorrichtung der eingangs angegebenen Art durch die im Anspruch 1 definierte Kombination von Merkmalen. Vorteilhafte Ausführungsformen der Erfindung sind in den abhängigen Ansprüchen definiert.

Vorteilhaft ist bei der so definierten Erfindung insbesondere, dass obere und untere Registrierplatten in verschiedenen Grössen und Formen vorgefertigt und auf Lager bereitgehalten werden können, so dass für jeden anzutreffenden Fall (vollbezahnter, teilbezahnter, unbezahnter oder mit Prothesen versehener Patient) im Wesentlichen ohne Vorbereitungsarbeiten eine passend ausgewählte obere und untere Registrierplatte gefunden und verwendet werden kann.

Vorteilhaft ist bei der so definierten Erfindung auch noch, dass die Registrierplatten flügelähnliche Auflageflächen aufweisen, mit denen sie bei bezahnten Patienten sowie bei Patienten mit Prothesen auf deren Zahnflächen, bei unbezahnten Patienten auf Wachsschablonen aufliegen. Bei jeder Registrierplatte ergibt sich dabei aus der jeweiligen Abwinkelung der Auflageflächen gegenüber dem Grundbereich und der Eckbereiche gegenüber den übrigen Auflagefläche eine räumliche Form der Registrierplatte, die sich generell dem Gebiss mit seiner räumlichen Krümmung (transversal wie auch sagittal) gut anpasst, wobei insbesondere die Anlage der flügelähnlichen Auflageflächen in Kombination mit der Vertiefung des Mittelteils einer oder beider Registrierplatten eine direkte Auflage auf den Zähnen zusammen mit einer seitlichen Sicherung gegen Verschiebung und dadurch eine zuverlässige Registrierung bezahnter Patienten ohne Vorarbeiten ermöglichen.

Vorteilhaft ist bei der Verjüngung der Auflageflächen der Registrierplatten und insbesondere bei der ausgeprägten Verjüngung der Auflageflächen der oberen Registrierplatte nach vorne, bezogen auf die Position der "in situ" beim Patienten eingesetzten Registrierplatten, dass dank dieser Massnahme die Prämolarzähne das Einsetzen der Registrierplatten nicht behindern und während des Einsetzens der Registrierplatten der Manipulationsspielraum etwas grösser ist.

Vorteilhaft ist beim Zusammenspiel der zweifachen Abwinkelung der Auflageflächen - gegenüber dem Grundbereich und gegenüber dem jeweils angrenzenden Übergangsbereich - und bei der sich daraus ergebenden Versetzung der Auflageflächen aus der Ebene des Grundbereiches heraus, dass, bezogen auf die Position der "in situ" beim Patienten eingesetzten Registrierplatten, die Übergangsbereiche als Schultern oder Stufen wirken, welche die Position der Registrierplatte transversal in der Ebene des Grundbereiches stabilisieren, während die sich nach vorne verjüngende Trapezform des Grundbereiches die Registrierplatte sagittal in der Ebene des Grundbereiches zu positionieren hilft.

Die Auflageflächen können dank den daran angebrachten durchgehenden Retentionsöffnungen leicht und schnell mittels Dentalsilikon an den Zahnflächen bzw. an den Wachsschablonen befestigt werden. Im Falle von echten Zahnflächen wird das Dentalsilikon direkt vor dem Patienten unter die Auflageflächen der Registrierplatte aufgespritzt, und dann werden die mit Dentalsilikon versehenen Auflageflächen der Registrierplatte auf die Zahnreihen oder Wachswälle gedrückt: Da das Dentalsilikon schnell aushärtet, kann die Fachperson nach Prüfung der Lage der Registrierplatten sofort d. h. ohne zusätzliche Sitzung und schon nach kurzer Zeit - wenigen Minuten - mit der Registrierung beginnen. Im Falle von bestehenden Prothesen lassen sich die Auflageflächen wie im Falle von echten Zahnflächen fixieren. Im Falle von Wachsschablonen lassen sich die Auflageflächen wie gewohnt auf die Wachsschablone aufschmelzen und/oder mit Wachs fixieren. Somit entfallen dank der Erfindung die beim Stand der Technik nötigen Vorbereitungsarbeiten im Labor, sowie für den Patienten zumindest eine Vorbereitungssitzung - und die entsprechende Unannehmlichkeit.

### Kurze Beschreibung der Zeichnungen

Ausführungsbeispiele der Erfindung werden nachfolgend anhand der Zeichnungen näher beschrieben, wobei in allen Figuren einander gleiche Teile mit gleichen Bezugszeichen bezeichnet werden. Dabei zeigen:
- Fig. 1a: eine Ausführungsform einer erfindungsgemässen unteren Registrierplatte in einer Ansicht von oben mit Bezug auf die Orientierung eines Patienten, an dessen Unterkiefer die Registrierplatte angeordnet ist;
- Fig. 1b: die gleiche Ausführungsform der erfindungsgemässen unteren Registrierplatte wie in Fig. 1a in einer Ansicht von hinten mit Bezug auf die Orientierung eines Patienten, an dessen Unterkiefer die Registrierplatte angeordnet ist;
- Fig. 1c: die gleiche Ausführungsform der erfindungsgemässen unteren Registrierplatte wie in Fig. 1a in einer von links betrachteten sagittalen Schnittansicht mit Bezug auf die Orientierung eines Patienten, an dessen Unterkiefer die Registrierplatte angeordnet ist;
- Fig. 2a: eine Ausführungsform einer erfindungsgemässen oberen Registrierplatte mit darin eingesetztem Stift mit Schreibspitze, in einer Ansicht von unten mit Bezug auf die Orientierung eines Patienten, an dessen Oberkiefer die Registrierplatte angeordnet ist;
- Fig. 2b: die gleiche Ausführungsform der erfindungsgemässen oberen Registrierplatte wie in Fig. 2a, ebenfalls mit darin eingesetztem Stift mit Schreibspitze, in einer Ansicht von hinten mit Bezug auf die Orientierung eines Patienten, an dessen Oberkiefer die Registrierplatte angeordnet ist;
- Fig. 2c: die gleiche Ausführungsform der erfindungsgemässen oberen Registrierplatte wie in Fig. 2a In einer von rechts betrachteten sagittalen Schnittansicht der Registrierplatte mit Bezug auf die Orientierung eines Patienten, an dessen Oberkiefer die Registrierplatte angeordnet ist, während der in der Registrierplatte eingesetzte Stift mit Schreibspitze in Seitenansicht d.h. nicht im Schnitt dargestellt ist.

### Wege zur Ausführung der Erfindung

Im Nachstehenden werden Orientierungsangaben wie oben/unten, innen/aussen, vorne/hinten, horizontal/vertikal, transversal/sagittal und dergleichen stets auf die Orientierung eines Patienten bezogen, an dessen Kiefer eine erfindungsgemässe Registrierplatte angeordnet ist.

Die erfindungsgemässe dentalmedizinische Vorrichtung zur Registrierung der Position der Kiefer eines Patienten in Bezug auf einander umfasst ein Paar von Registrierplatten 100 und 200, von denen eine obere Registrierplatte dazu bestimmt ist, am Oberkiefer des Patienten befestigt zu werden, und eine untere Registrierplatte dazu bestimmt ist, am Unterkiefer des Patienten befestigt zu werden.

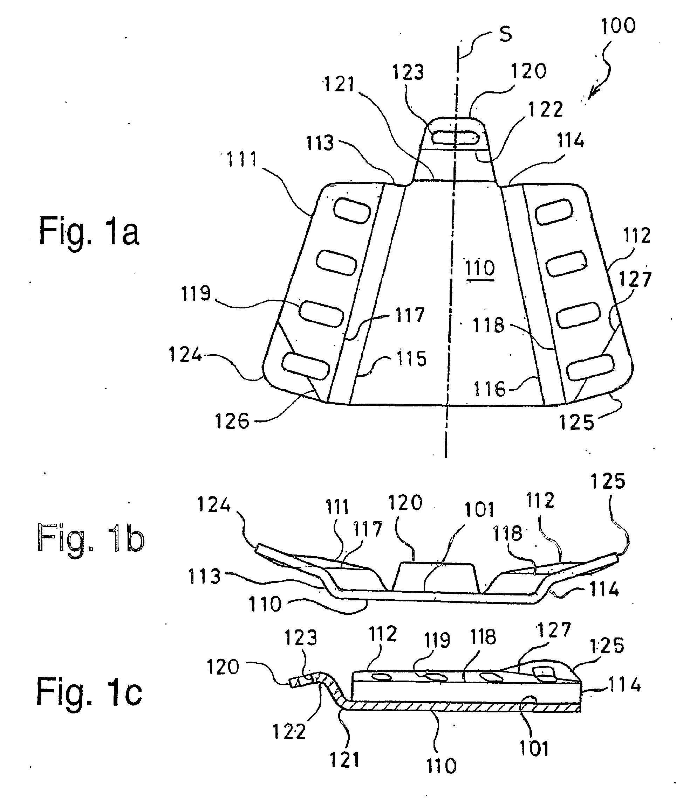

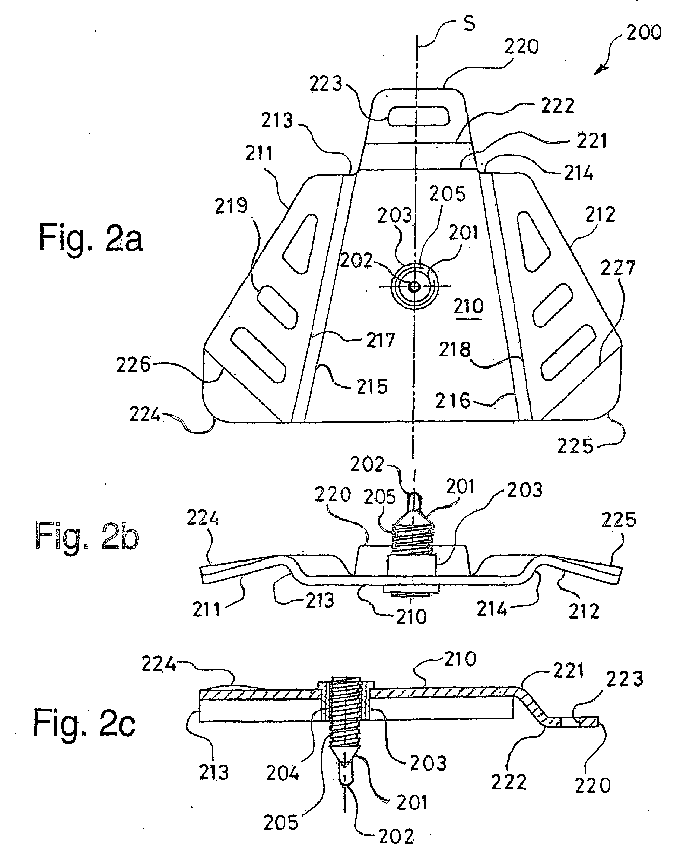

Die in Fig. 1a, 1b und 1c gezeigte Ausführungsform einer unteren Registrierplatte 100 und die in Fig. 2a, 2b und 2c gezeigte Ausführungsform einer oberen Registrierplatte 200 sind jeweils um eine Sagittalebene S spiegelsymmetrisch ausgebildet.

Wie aus den Figuren ersichtlich, weist jede Registrierplatte eine im Wesentlichen flächige Ausdehnung bei nahezu konstanter Dicke auf. Wenn solche Registrierplatten aus Metall wie rostfreiem Stahl bestehen, können sie durch Bearbeitung einer Metallplatte (Pressen, Stanzen, Biegen und dergleichen) gefertigt werden, woraus sich die genannte flächige Ausdehnung und die konstante Dicke von selbst ergeben. Die Verwendung anderer Materialien und Fertigungsweisen, beispielsweise Kunststoff unter Verwendung von Pressen und/oder Spritzguss, ist jedoch nicht auszuschliessen.

Zur Registrierung der Position der Kiefer eines Patienten in Bezug auf einander ist beim dargestellten Ausführungsbeispiel die obere Registrierplatte 200 mit einem Stift 201 mit Schreibspitze 202 und die untere Registrierplatte 100 mit einer ebenen Schreibfläche 101 für die Schreibspitze 202 versehen. Zur Befestigung des Stifts 201 an der oberen Registrierplatte 200 ist eine Führungshülse 203 im Wesentlichen in der Mitte eines ebenen Grundbereiches 210 der oberen Registrierplatte 200 angebracht, beispielsweise eingestanzt. Der Stift 201 ist am einen Ende davon in diese Führungshülse 203 angeordnet und aufgenommen, die Schreibspitze 202 ist am anderen, frei bleibenden Ende des Stifts 201 ausgebildet. Beim dargestellten Ausführungsbeispiel ist die Führungshülse 203 an der oberen Registrierplatte 200 durch Presssitz befestigt, und es ist in der Führungshülse 203 eine durchgehende Gewindebohrung 204 vorgesehen, in die der Stift 201 mittels eines daran vorgesehenen Aussengewindes 205 eingeschraubt ist. Es wären aber auch andere Fixierarten denkbar: Die Führungshülse könnte beispielsweise am Grundbereich der Registrierplatte angeschweisst sein, der Stift könnte beispielsweise mittels einer in die Führungshülse eingelassenen Schraube oder noch durch Spannung der Führungshülse darin befestigt sein, auch könnte der Stift mit der Registrierplatte einstückig sein, beispielsweise direkt daraus gestanzt sein.

Auf einen ebenen Grundbereich 110 der unteren Registrierplatte 100 kann eine Wachsschicht angebracht oder eine schreibdruckempfindliche Folie angehaftet werden, so dass die Schreibspitze 202 beim Aufsetzen auf die so vorbereitete Schreibfläche 101 mit dieser zusammenwirkt und darauf bzw. auf der Wachsschicht oder auf der Folie bei jeder relativen Bewegung eine Schreibspur hinterlässt, aus der sich - wie bereits erwähnt - eine Information zur Lage der Kiefer des Patienten in Bezug auf einander ableiten lässt.

Bei der oberen Registrierplatte 200 von der Führungshülse 203 mit dem darin angebrachten Stift 201 abgesehen, die nicht als Bestandteil der oberen Registrierplatte 200, sondern als daran angebrachtes Schreibwerkzeug zu verstehen sind, ist jede der beiden Registrierplatten 100 bzw. 200 einstückig.

Jede der beiden Registrierplatten 100 bzw. 200 umfasst beidseitig ihres ebenen Grundbereiches 110 bzw. 210 und der Sagittalebene S sowie um diese Sagittalebene S spiegelsymmetrisch ein Paar von Auflageflächen 111, 112 bzw. 211, 212 und, jeweils angrenzend an den jeweiligen Grundbereich 110 bzw. 210 sowie an eine der Auflageflächen 111, 112 bzw. 211, 212 und dazwischen sowie um die Sagittalebene S spiegelsymmetrisch angeordnet, ein Paar von im Wesentlichen ebenen Übergangsbereichen 113, 114 bzw. 213, 214.

Dabei ist jeder Übergangsbereich 113, 114 bzw. 213, 214 sowohl von dem daran angrenzenden Grundbereich 110 bzw. 210 wie auch von der daran angrenzenden Auflagefläche 111, 112 bzw. 211, 212 auf solche Weise abgewinkelt, dass zufolge der Verkettung dieser beiden Abwinkelungen die Auflageflächen im Endergebnis aus der Ebene des Grundbereiches heraus versetzt sind. Dabei sind die jeweiligen Abwinkelungen, bezogen auf die Position einer "in situ" beim Patienten eingesetzten Registrierplatte, so orientiert, dass die Versetzung der Auflageflächen aus der Ebene des Grundbereiches heraus bei einer oberen Registrierplatte 200 nach unten und bei einer unteren Registrierplatte 100 nach oben erfolgt, wie es Fig. 1b und 1c bzw. Fig. 2b und 2c zeigen.

Zur Anpassung an die Form der Kiefer des Patienten hat der jeweilige Grundbereich 110 bzw. 210 nahezu die Form eines sich deltaförmig nach vorne verjüngenden, um die Sagittalebene S spiegelsymmetrischen, gleichschenkligen Trapezes, was hilft, die betreffende Registrierplatte sagittal in der Ebene ihres Grundbereiches - d.h. im Mund des Patienten im Wesentlichen in der Horizontalen - zu positionieren. Ebenfalls zur Anpassung an die Form der Kiefer des Patienten und zudem zum Bewerkstelligen der vorerwähnten Abwinkelungen und der vorerwähnten Versetzung der Auflageflächen 111, 112 bzw. 211, 212 aus der Ebene des jeweiligen Grundbereiches 110 bzw. 210 heraus, ist jeder Übergangsbereich 113, 114 bzw. 213, 214 länglich und nahezu parallelogrammförmig ausgebildet, wie es insbesondere in Fig. 1a und 2a erkennbar ist. Dabei grenzt jeder Übergangsbereich 113, 114 bzw. 213, 214 mit der einen seiner längeren Seiten 115, 116 bzw. 215, 216 an eine der nichtparallelen Seiten des nahezu trapezförmigen Grundbereiches 110 bzw. 210 sowie mit der anderen seiner längeren Seiten 117, 118 bzw. 217, 218 an eine der Auflageflächen 111, 112 bzw. 211, 212 an.
Zur bestmöglichen Anpassung der Lage der Auflageflächen 111, 112 bzw. 211, 212 an die Lage der Zahnflächen bzw. Wachsschablonen, auf welche die Auflageflächen zu befestigen sind, sind bei der oberen und der unteren Registrierplatte 100 bzw. 200 die Auflageflächen 111, 112 bzw. 211, 212 gegenüber dem Grundbereich 110 bzw. 210 der jeweiligen Registrierplatte jeweils um einen etwa gleichen Winkel nach oben abgewinkelt. Zudem weist jede der Auflageflächen 111, 112 bzw. 211, 212 einen hinten aussen befindlichen Eckbereich 124, 125 bzw. 224, 225 auf, der als nahezu gleichschenkliges rechtwinkliges Dreieck ausgebildet ist, mit einer Hypotenuse 126, 127 bzw. 226, 227 des betreffenden Dreiecks an die übrige Auflagefläche angrenzt und gegenüber der übrigen Auflagefläche nach oben abgewinkelt ist. Somit ist der betreffende Eckbereich gegenüber dem Grundbereich seiner Registrierplatte noch mehr als die übrige Auflagefläche dieser Registrierplatte nach oben abgewinkelt, wie es insbesondere in Fig. 1b und 1c bzw. 2b und 2c erkennbar ist. Dabei sind bei der oberen und der unteren Registrierplatte 100 bzw. 200 die Eckbereiche 124, 125 bzw. 224, 225 gegenüber der jeweils übrigen Auflagefläche der jeweiligen Registrierplatte um einen etwa gleichen Winkel nach oben abgewinkelt, wie dies auch bei den Auflageflächen gegenüber dem Grundbereich der jeweiligen Registrierplatte der Fall ist, mit der Folge, dass die an den Auflageflächen angeformten abstehenden Eckbereichen die oberen und unteren Auflageflächen nicht daran hindern, aufeinander zu passen.

Ebenfalls einen Beitrag zur bestmöglichen Anpassung der Lage der Auflageflächen 111, 112 bzw. 211, 212 an die Lage der Zahnflächen bzw. Wachsschablonen, auf welche die Auflageflächen zu befestigen sind, leistet die Form der Auflageflächen. Wie in Fig. 1a erkennbar, sind die Auflageflächen 111, 112 der unteren Registrierplatte 100 nahezu trapezförmig ausgebildet, und zwar sowohl inklusive als exklusive des jeweiligen Eckbereiches 124, 125 betrachtet, wobei diese trapezförmige Form wenig von einer rechteckigen Form abweicht, indem sich die Auflageflächen 111, 112 der unteren Registrierplatte 100 um nicht mehr als ein Dutzend Winkelgrad, vorzugsweise um etwa 6°, nach vorne verjüngen. Wie in Fig. 2a erkennbar, sind die Auflageflächen 211, 212 der oberen Registrierplatte 200 im Wesentlichen fünfeckig ausgebildet aber wiederum, wenn exklusive des jeweiligen Eckbereiches 224, 225 betrachtet, nahezu trapezförmig, wobei diese trapezförmige Form wenig von einer dreieckigen Form abweicht, indem sich die Auflageflächen 211, 212 der oberen Registrierplatte 200 ausgeprägt deltaförmig nach vorne verjüngen.

Jede der Auflageflächen 111, 112 bzw. 211, 212 ist mit mehreren durchgehenden Retentionsöffnungen 119 bzw. 219 versehen, die - wie bereits erwähnt - dazu dienen, die Auflageflächen an Zahnflächen bzw. Wachsschablonen mittels Dentalsilikon zu befestigen. Als für die Befestigung vorteilhafter Kompromiss der relativen Dimensionen von Auflagefläche und Retentionsöffnungen empfiehlt sich eine auf der Auflagefläche aufsummierte Dimension der Retentionsöffnungen 119 bzw. 219 von bis zu einem Drittel der Dimension der gesamten Auflagefläche 111, 112 bzw. 211, 212.

Zur Erleichterung ihrer Handhabung sind die Registrierplatten 100 bzw. 200 vorne in der Mitte (fachsprachlich: "anterior") und angrenzend an ihren jeweiligen Grundbereich 110 bzw. 210 mit einem jeweiligen Ansatz 120 bzw. 220 versehen, der im Wesentlichen dazu bestimmt ist, als Griff für die Finger der Fachperson oder für eine Zange zu dienen. Zu diesem Zweck ist der Ansatz 120 bzw. 220 ähnlich wie bei den Auflageflächen 111, 112 bzw. 211, 212 über eine Verkettung von zwei Abwinkelungen an jeweiligen Biegestellen 121, 122 bzw. 221, 222 aus der Ebene des Grundbereiches heraus versetzt und zudem im Bereich seines freien Endes mit einer durchgehenden Öffnung 123 bzw. 223 versehen. Dabei sind die erwähnten Abwinkelungen der Ansätze 120 bzw. 220 so bemessen, dass sich das freie Ende des Ansatzes 220 der oberen Registrierplatte 200 nach vorne nahezu horizontal d.h. parallel zum Grundbereich 210 erstreckt (Fig. 2c), während sich das freie Ende des Ansatzes 120 der unteren Registrierplatte 100 nach vorne abwärts d.h. schräg zur Ebene des Grundbereiches 110 erstreckt (Fig. 1c).

### BEZUGSZEICHENLISTE

- S: Sagittalebene
- 100: untere Registrierplatte
- 101: Schreibfläche
- 110: Grundbereich der unteren Registrierplatte 100
- 111: Auflagefläche der unteren Registrierplatte 100
- 112: Auflagefläche der unteren Registrierplatte 100
- 113: Übergangsbereich zwischen Auflagefläche 111 und Grundbereich 110
- 114: Übergangsbereich zwischen Auflagefläche 112 und Grundbereich 110
- 115: längere Seite des Übergangsbereiches 113
- 116: längere Seite des Übergangsbereiches 114
- 117: längere Seite des Übergangsbereiches 113
- 118: längere Seite des Übergangsbereiches 114
- 119: Retentionsöffnungen an den Auflageflächen (111, 112)
- 120: Ansatz am Grundbereich 110 der unteren Registrierplatte 100
- 121: Abwinkelung des Ansatzes 120
- 122: Abwinkelung des Ansatzes 120
- 123: Öffnung im Ansatz 120
- 124: Eckbereich
- 125: Eckbereich
- 126: Hypotenuse des Eckbereiches 124
- 127: Hypotenuse des Eckbereiches 125
- 200: obere Registrierplatte
- 201: Stift
- 202: Schreibspitze
- 203: Führungshülse
- 204: Gewindebohrung der Führungshülse 203
- 205: Aussengewinde des Stifts 201
- 210: Grundbereich der oberen Registrierplatte 200
- 211: Auflagefläche der oberen Registrierplatte 200
- 212: Auflagefläche der oberen Registrierplatte 200
- 213: Übergangsbereich zwischen Auflagefläche 211 und Grundbereich 210
- 214: Übergangsbereich zwischen Auflagefläche 212 und Grundbereich 210
- 215: längere Seite des Übergangsbereiches 213
- 216: längere Seite des Übergangsbereiches 214
- 217: längere Seite des Übergangsbereiches 213
- 218: längere Seite des Übergangsbereiches 214
- 219: Retentionsöffnungen an den Auflageflächen (211, 212)
- 220: Ansatz am Grundbereich 210 der oberen Registrierplatte 200
- 221: Abwinkelung des Ansatzes 220
- 222: Abwinkelung des Ansatzes 220
- 223: Öffnung im Ansatz 220
- 224: Eckbereich der Auflagefläche 211
- 225: Eckbereich der Auflagefläche 212
- 226: Hypotenuse des Eckbereiches 224
- 227: Hypotenuse des Eckbereiches 225

## Patentansprüche

1. Dentalmedizinische Vorrichtung zur Registrierung der Position der Kiefer eines Patienten in Bezug auf einander, wobei die Vorrichtung ein Paar von Registrierplatten umfasst, von denen mindestens die eine einstückig ist sowie eine im Wesentlichen flächige Ausdehnung bei nahezu konstanter Dicke aufweist, eine obere Registrierplatte (200) am Oberkiefer des Patienten und eine untere Registrierplatte (100) am Unterkiefer des Patienten befestigbar ist, bezogen auf die Position eines "in situ" beim Patienten eingesetzten Paares von Registrierplatten jede der Registrierplatten (100; 200) um eine Sagittalebene (S) spiegelsymmetrisch ist, und die eine Registrierplatte (100) mit einer ebenen Schreibfläche (101) und die andere Registrierplatte (200) mit einer zur Zusammenwirkung mit der Schreibfläche (101) bestimmten Schreibspitze (202) versehen ist, **dadurch gekennzeichnet, dass**
mindestens eine der Registrierplatten (100; 200) einen ebenen Grundbereich (110; 210), beidseitig des Grundbereiches und der Sagittalebene (S) ein Paar von Auflageflächen (111, 112; 211, 212) mit daran angebrachten durchgehenden Retentionsöffnungen (119; 219) und, jeweils angrenzend an den Grundbereich sowie an eine Auflagefläche und dazwischen angeordnet, ein Paar von im Wesentlichen ebenen Übergangsbereichen (113, 114; 213, 214) aufweist, wobei
der Grundbereich (110; 210) nahezu die Form eines sich deltaförmig nach vorne verjüngenden, um die Sagittalebene S spiegelsymmetrischen, gleichschenkligen Trapezes aufweist, während jeder Übergangsbereich (113, 114; 213, 214) länglich und nahezu parallelogrammförmig ist und mit der einen seiner längeren Seiten (115, 116; 215, 216) an eine der nichtparallelen Seiten des nahezu trapezförmigen Grundbereiches (110; 210) sowie mit der anderen seiner längeren Seiten (117, 118; 217, 218) an eine Auflagefläche (111, 112; 211, 212) angrenzt, und
jeder Übergangsbereich (113, 114; 213, 214) sowohl von dem daran angrenzenden Grundbereich (110; 210) wie auch von der daran angrenzenden Auflagefläche (111, 112; 211, 212) abgewinkelt ist, derart, dass die Auflageflächen aus der Ebene des Grundbereiches heraus und dabei, bezogen auf die Position einer "in situ" beim Patienten eingesetzten Registrierplatte, bei der oberen Registrierplatte (200) nach unten und bei der unteren Registrierplatte (100) nach oben versetzt sind.

2. Vorrichtung nach Anspruch 1, **dadurch gekennzeichnet, dass**, bezogen auf die Position eines "in situ" beim Patienten eingesetzten Paares von Registrierplatten, die Auflageflächen (111, 112; 211, 212) der oberen und der unteren Registrierplatte (100; 200) gegenüber dem entsprechenden Grundbereich (110; 210) der jeweiligen Registrierplatte jeweils um einen etwa gleichen Winkel nach oben abgewinkelt sind.

3. Vorrichtung nach Anspruch 2, **dadurch gekennzeichnet, dass**, bezogen auf die Position einer "in situ" beim Patienten eingesetzten Registrierplatte, jede Auflagefläche (111, 112; 211, 212) einen hinten aussen befindlichen Eckbereich (124, 125; 224, 225) aufweist, der als nahezu gleichschenkliges rechtwinkliges Dreieck ausgebildet ist und mit einer Hypotenuse (126, 127; 226, 227) dieses Dreiecks an die übrige Auflagefläche angrenzt, wobei der Eckbereich an der betreffenden Hypotenuse gegenüber der übrigen Auflagefläche nach oben abgewinkelt ist und somit gegenüber dem Grundbereich (110; 210) der Registrierplatte noch mehr als die übrige Auflagefläche nach oben abgewinkelt ist.

4. Vorrichtung nach Anspruch 3, **dadurch gekennzeichnet, dass**, bezogen auf die Position eines "in situ" beim Patienten eingesetzten Paares von Registrierplatten, die Eckbereiche (124, 125; 224, 225) der Auflageflächen der oberen und der unteren Registrierplatte (100; 200) gegenüber der übrigen Auflagefläche der jeweiligen Registrierplatte jeweils um einen etwa gleichen Winkel abgewinkelt sind.

5. Vorrichtung nach einem der Ansprüche 1 bis 4, **dadurch gekennzeichnet, dass** eine Auflagefläche (111, 112; 211, 212) mehrere durch die Registrierplatte durchgehende Retentionsöffnungen (119; 219) aufweist und die auf der Auflagefläche aufsummierte Dimension der Retentionsöffnungen bis zu ein Drittel der Dimension der gesamten Auflagefläche ausmacht.

6. Vorrichtung nach einem der Ansprüche 1 bis 5, **dadurch gekennzeichnet, dass** die Auflageflächen (111, 112) der unteren Registrierplatte (100) sowohl unter Einschluss als auch unter Ausschluss des jeweiligen Eckbereiches (124, 125) nahezu trapezförmig ausgebildet sind, wobei sie sich, bezogen auf die Position der "in situ" beim Patienten eingesetzten unteren Registrierplatte, um nicht mehr als ein Dutzend Winkelgrad nach vorne verjüngen.

7. Vorrichtung nach Anspruch 6, **dadurch gekennzeichnet, dass** sich die Auflageflächen (111, 112) der unteren Registrierplatte (100), bezogen auf die Position der "in situ" beim Patienten eingesetzten unteren Registrierplatte, um etwa 6° nach vorne verjüngen.

8. Vorrichtung nach einem der Ansprüche 1 bis 5, **dadurch gekennzeichnet, dass** die Auflageflächen (211, 212) der oberen Registrierplatte (200) im Wesentlichen fünfeckig sowie unter Ausschluss des jeweiligen Eckbereiches (224, 225) nahezu trapezförmig sowie annähernd dreieckig sind, indem sie sich, bezogen auf die Position der "in situ" beim Patienten eingesetzten oberen Registrierplatte, ausgeprägt nach vorne verjüngen.

## Claims

1. A medico-dental device for recording the position of the jaws of a patient in relation to one another, the device comprising a pair of recording plates, at least one of which is in one piece and extends substantially in form of a surface and with an almost constant thickness, an upper recording plate (200) being able to be secured on the upper jaw of the patient and a lower recording plate (100) being able to be secured on the lower jaw of the patient, each of the recording plates (100; 200) being mirror-symmetric about a sagittal plane (S), reference being made to the position of a pair of recording plates when fitted "in situ" in the patient, and one recording plate (100) being provided with a plane writing surface and the other one recording plate (200) being provided with a stylus (202) designed to cooperate with the writing surface (101), **characterized in that**
at least one of the recording plates (100; 200) has a planar base region (110; 210), a pair of support surfaces (111, 112; 211, 212) arranged on both sides of the planar base region and the sagittal plane (S) and having piercing retention openings (119; 219) arranged thereon, and a pair of substantially planar transition regions (113, 114; 213, 214) each arranged between and adjacent to the base region and a support surface, respectively,
the base region (110; 210) having almost the shape of an isosceles trapezoid which tapers delta-shaped toward the front and is mirror-symmetric about the sagittal plane (S), whereas each transition region (113, 114; 213, 214) is elongate and approximately parallelogram-shaped adjacent with one of its longer sides (115, 116; 215, 216) to one of the nonparallel sides of the almost trapezoidal base region (110; 210) and with the other one of its longer sides (117, 118; 217, 218) to a support surface (111, 112; 211, 212),
and each transition region (113, 114; 213, 214) being angled away both from the base region (110; 210) adjacent thereto as well as from the support surface (111, 112; 211, 212) adjacent thereto in such manner that the support surfaces are offset from the plane of the base region, specifically, downwardly offset in the upper recording plate (200) and upwardly offset in the lower recording plate (100), reference being made to the position of a pair of recording plates when fitted "in situ" in the patient.

2. The device according to claim 1, **characterized in that**, reference being made to the position of a pair of recording plates when fitted "in situ" in the patient, the support surfaces (111, 112; 211, 212) of the upper and lower recording plates (100; 200) are angled upwardly, reference being made to the corresponding base region (110; 210) of the respective recording plate, each at approximately the same angle.

3. The device according to claim 2, **characterized in that**, reference being made to the position of a pair of recording plates when fitted "in situ" in the patient, each support surface (111, 112; 211, 212) has a corner region (124, 125; 224, 225) which is located exterior and posterior and is shaped as an approximately isosceles right-angled triangle with a hypotenuse (126, 127; 226, 227) of this triangle adjacent to the remainder of the support surface, the corner region being angled upwardly at the respective hypotenuse, reference being made to the remainder of the support surface and thus being angled upwardly, reference being made to the base region (110; 210) of the recording plate even more than the remainder of the support surface.

4. The device according to claim 3, **characterized in that**, reference being made to the position of a pair of recording plates when fitted "in situ" in the patient, the corner regions (124, 125; 224, 225) of the support surfaces of the upper and lower recording plates (100; 200) each are angled at approximately the same angle relative to the remainder of the support surface of the respective recording plate.

5. The device according to any one of claims 1 to 4, **characterized in that** a support surface (111, 112; 211, 212) has several piercing retention openings (119; 219) extending through the recording plate, and the summed up dimension of the piercing retention openings on the support surface represents up to a third of the dimension of the total support surface.

6. The device according to any one of claims 1 to 5, **characterized in that** the support surfaces (111, 112) of the lower recording plate (100), both whether including or excluding the respective corner region (124, 125), are of approximately trapezoidal shape and taper toward the front by no more than a dozen angle degrees, reference being made to the position of the lower recording plate when fitted "in situ" in the patient.

7. The device according to claim 6, **characterized in that** the support surfaces (111, 112) of the lower recording plate (100) taper toward the front by approximately 6 angle degrees, reference being made to the position of the lower recording plate when fitted "in situ" in the patient.

8. The device according to any one of claims 1 to 5, **characterized in that** the support surfaces (211, 212) of the upper recording plate (200) are substantially pentagonal and, excluding the respective corner region (224, 225), are of approximately trapezoidal shape as well as approximately triangular, since they strongly taper toward the front, reference being made to the position of the upper recording plate when fitted "in situ" in the patient.

## Revendications

1. Dispositif de médecine dentaire pour l'enregistrement de la position des mâchoires d'un patient l'une part rapport à l'autre, le dispositif comportant une paire de plaques d'enregistrement dont au moins l'une est d'une seule pièce et s'étend essentiellement sous forme de surface et avec une épaisseur presque constante, une plaque supérieure d'enregistrement (200) pouvant être fixée à la mâchoire supérieure du patient et une plaque inférieure d'enregistrement (100) pouvant être fixée à la mâchoire inférieure du patient, chacune des plaques d'enregistrement (100; 200) présentant une symétrie miroir par rapport à un plan sagittal (S), référence étant faite à la position d'une paire de plaques d'enregistrement placées "in situ" sur le patient, et l'une des plaques d'enregistrement (100) étant pourvue d'une surface d'écriture plane et l'autre plaque d'enregistrement (200) étant pourvue d'un stylet (202) destiné à coopérer avec la surface d'écriture (101), **caractérisé en ce que**
au moins une des plaques d'enregistrement (100; 200) comporte une surface de base plane (110; 210), une paire de surfaces de support (111, 112; 211, 212) disposées des deux côtés de la surface de base plane et du plan sagittal (S) et présentant disposées sur elles des ouvertures de rétention traversantes (119; 219), et une paire de régions de transition (113, 114; 213, 214) essentiellement planes disposées chacune entre et adjacentes respectivement à la région de base et à une surface de support,
la région de base (110; 210) ayant presque la forme d'un trapèze isocèle qui se rétrécit en forme de delta vers l'avant et présente une symétrie miroir par rapport au plan sagittal (S), tandis que chaque région de transition (113, 114; 213, 214) est allongée et approximativement en forme de parallélogramme adjacent par l'un de ses côtés les plus longs (115, 116; 215, 216) à l'un des côtés non parallèles de la région de base presque trapézoïdale (110; 210) et par l'autre de ses côtés les plus longs (117, 118; 217, 218) à l'une des surfaces de support (111, 112; 211, 212),
et chaque région de transition (113, 114; 213, 214) s'écartant sous un angle aussi bien de la région de base (110; 210) qui lui est adjacente que de la surface de support (111, 112; 211, 212) lui est adjacente de telle manière que les surfaces de support sont décalées du plan de la région de base, et plus particulièrement, sont décalées vers le bas dans la plaque supérieure d'enregistrement (200) et vers le haut dans la plaque inférieure d'enregistrement (100), référence étant faite à la position d'une paire de plaques d'enregistrement placées "in situ" sur le patient.

2. Dispositif selon la revendication 1, **caractérisé en ce que**, référence étant faite à la position d'une paire de plaques d'enregistrement placées "in situ" sur le patient les surfaces de support (111, 112; 211, 212) des plaques d'enregistrement supérieure et inférieure (100; 200) s'étendent en angle vers le haut par rapport à la région de base correspondante (110; 210) de la plaque d'enregistrement respective en formant chaque fois approximativement le même angle.

3. Dispositif selon la revendication 2, **caractérisé en ce que**, référence étant faite à la position d'une paire de plaques d'enregistrement placées "in situ" sur le patient chaque surface de support (111, 112; 211, 212) comporte une région de coin (124, 125; 224, 225) située en position extérieure et postérieure et qui est approximativement en forme de triangle rectangle isocèle avec une hypoténuse (126, 127; 226, 227) de ce triangle qui est adjacente au reste de la surface de support, la région de coin s'étendant en angle vers le haut à l'endroit de l'hypoténuse respective par rapport au reste de la surface de support et se trouvant ainsi déviée en angle vers le haut par rapport à la région de base (110; 210) de la plaque d'enregistrement encore plus que le reste de la surface de support.

4. Dispositif selon la revendication 3, **caractérisé en ce que**, référence étant faite à la position d'une paire de plaques d'enregistrement placées "in situ" sur le patient, les régions de coin (124, 125; 224, 225) des surfaces de support des plaques d'enregistrement supérieure et inférieure (100; 200) s'étendent chacune en angle en formant approximativement le même angle par rapport au reste de la surface de support de la plaque d'enregistrement respective.

5. Dispositif selon l'une des revendications 1 à 4, **caractérisé en ce qu'**une surface de support (111, 112; 211, 212) comporte un certain nombre d'ouvertures de rétention traversantes (119; 219) qui s'étendent à travers la plaque d'enregistrement, et la dimension cumulée des ouvertures de rétention traversantes sur la surface de support représente jusqu'à un tiers de la dimension de la surface totale de support.

6. Dispositif selon l'une des revendications 1 à 5, **caractérisé en ce que** les surfaces de support (111, 112) de la plaque d'enregistrement inférieure (100) sont, que ce soit en incluant ou en excluant la région de coin respective (124, 125), de forme approximativement trapézoïdale et se rétrécissent vers l'avant d'une manière qui n'excède pas plus d'une douzaine de degrés angulaires, référence étant faite à la position de la plaque inférieure d'enregistrement placée "in situ" sur le patient.

7. Dispositif selon la revendication 6, **caractérisé en ce que** les surfaces de support (111, 112) de la plaque d'enregistrement inférieure (100) se rétrécissent vers l'avant approximativement selon un angle de 6 degrés, référence étant faite à la position de la plaque inférieure d'enregistrement placée "in situ" sur le patient.

8. Dispositif selon l'une des revendications 1 à 5, **caractérisé en ce que** les surfaces de support (211, 212) de la plaque d'enregistrement supérieure (200) sont essentiellement pentagonales et sont, en excluant la région de coin respective (224, 225), de forme approximativement trapézoïdale aussi bien qu'approximativement triangulaire du fait qu'elles se rétrécissent fortement vers l'avant, référence étant faite à la position de la plaque supérieure d'enregistrement placée "in situ" sur le patient.
